# EUROPÄISCHE PATENTSCHRIFT

(11) **EP 1 802 441 B1**
(45) Veröffentlichungstag und Bekanntmachung des Hinweises auf die Patenterteilung: **18.05.2011**
(21) Anmeldenummer: 05792065.4
(22) Anmeldetag: 29.09.2005
(51) Int. Cl.: B29C 45/32, B29C 45/64, B29C 45/40, B29C 45/17

(54) **SCHLIESSEINHEIT FÜR EINE SPRITZGIESSMASCHINE MIT ETAGENWERKZEUG**
CLOSING UNIT FOR AN INJECTION MOULDING MACHINE COMPRISING A STACK MOULD
UNITE DE FERMETURE DESTINEE A UNE MACHINE DE MOULAGE PAR INJECTION COMPORTANT UN MOULE A ETAGES

(30) Priorität: 15.10.2004 DE 102004050311
(43) Veröffentlichungstag der Anmeldung: 04.07.2007
(73) Patentinhaber: KraussMaffei Technologies GmbH, 80997 München (DE)
(72) Erfinder: WIMBERGER, Klaus, 82166 Gräfelfing (DE)
(74) Vertreter: Wilhelm, Ludwig
(86) Internationale Anmeldenummer: PCT/EP2005/054907
(87) Internationale Veröffentlichungsnummer: WO 2006/042781

(56) Entgegenhaltungen:
- EP-A- 0 475 243
- WO-A-97/48540
- US-A- 6 139 305

## Beschreibung

Die Erfindung betrifft eine Schließeinheit für eine Spritzgießmaschine mit einem Etagenwerkzeug wie im Oberbegriff des Patentanspruchs 1 angegeben.

Bei einer Schließeinheit für eine Spritzgießmaschine mit einem solchen Etagenwerkzeug ist bekannter Weise eine Zwischenplatte zwischen zwei Werkzeugaufspannplatten vorgesehen. Sowohl zwischen der einen Werkzeugaufspannplatte und der Zwischenplatte wie auch zwischen der anderen Werkzeugaufspannplatte und der Zwischenplatte können Formwerkzeuge vorgesehen werden, die dann eben etagenweise angeordnet sind. Ausführungsformen solche Etagenwerkzeug sind in der EP 0 475 243 sowie der WO 97/48540 angegeben.

Eine solche Schließeinrichtung hat den Vorteil, dass bei gleicher Schließkraft mehrere Formwerkzeuge mit zumindest zwei Formnestern vorgesehen und geschlossen gehalten werden können.

Überdies ist es beim Einsatz einer sogenannten Wendeplatte als Zwischenplatte möglich, in einer ersten Kavität ein erstes Produkt und -nach einer Drehung in einer zweiten Kavität unter Einschluss des ersten Produktes weiteres Material, insbesondere ein unterschiedliches Material, anzuspritzen. Auf diese Weise können Mehrkomponenten-Produkte hergestellt werden. Aus diesem Grund spricht man auch von 2-K- oder 3-K-Produkten (K für Komponente). Wie der Name schon sagt, ist eine als Wendeplatten ausgebildete Zwischenplatte drehbar. Je nach Ausführungsform kann sie überdies auch noch linear - und zwar in Öffnungs- und Schließrichtung - verfahrbar ausgebildet sein. Beide Varianten von Wendeplatten sind aus dem Stand der Technik bekannt. Im Zusammenhang mit solchen Wendeplattenmaschinen verweisen wir auf die DE 101 52 394, die EP 0 895 848, die EP 1 119 449 und die US 6,139,305, die eine schießenheit gemäß dem Oberbegriff des Anspruchs 1 beschreibt.

Das Problem für den Betreiber einer solchen Spritzgießmaschine mit einer eingangs beschriebenen Schließeinheit besteht aber nun darin, dass er diese in der Regel nur dann einsetzen kann, wenn er für beide Seiten des Zwischenwerkzeuges Formkavitäten zur Herstellung eines entsprechenden Produktes besitzt. Will ein solcher Anwender jedoch lediglich ein einfaches Produkt, welches aus nur einer Komponente besteht, unter Verwendung eines einzigen Formwerkzeuges herstellen, so kann er bisher eine Maschine mit einer Zwischenplatte in der Schließeinheit nicht verwenden.

Aufgabe der vorliegenden Erfindung ist es, eine Schließeinheit der eingangs genannten Art auch zur Verwendung mit nur einem Formwerkzeug verwendbar zu machen.

Diese Aufgabe wird durch die im Anspruch 1 genannten Merkmale gelöst.

Mit ein wesentlicher Gedanke der vorliegenden Erfindung ist es, zwischen einer Werkzeugaufspannplatte und einer Zwischenplatte entweder ein Dummywerkzeug anzuordnen oder die Zwischenplatte fest mit der Werkzeugaufspannplatte zu verbinden.

Durch beide Maßnahmen ist es möglich, auf der jeweils anderen Seite das zu Verfügung stehende Formwerkzeug in an sich bekannter Weise einzubauen und die mit der Zwischenplatte versehene Schließeinheit auch zur Herstellung von sogenannten 1-K-Komponenten zu verwenden. Auf diese Art und Weise kann ein Hersteller seinen gesamten Maschinenpark möglichst gut auslasten.

Die Schließeinheiten können an sich natürlich unterschiedlich ausgebildet sein. So ist es möglich, die Zwischenplatte selbst evtl. drehbar, jedoch ortsfest vorzusehen und die beiden Werkzeugaufspannplatten jeweils linear beweglich, und zwar aufeinander zu- und voneinander weg verschiebbar auszubilden.

Alternativ ist es möglich, eine Werkzeugaufspannplatte fest anzuordnen und sowohl die andere Werkzeugplatte wie auch die Zwischenplatte linear verschieblich auszubilden. Wie bereits oben ausgeführt können beide Ausführungsformen noch zusätzlich mit einer drehbaren Wendeplatte versehen werden. In diesem Falle lässt sich die Zwischenplatte um eine Achse drehen, so dass die Seiten der Wendeplatten beispielsweise um 180°, möglicherweise auch um 90° verdrehbar sind.

Aufgabe des Dummywerkzeugs ist es insgesamt, das bei der Herstellung eines 1-K-Produktes fehlende Formwerkzeug zu ersetzen. Die Konstruktion oder Anordnung des Dummywerkzeugs kann unterschiedlich sein. In einer ersten Alternative ist es möglich, das Dummywerkzeug einteilig auszugestalten und entweder an einer Formaufspannplatte oder an der Zwischenplatte zu befestigen. Natürlich ist es auch möglich, das Dummywerkzeug zwei- oder mehrteilig auszugestalten, wobei bei der zweiteiligen Ausgestaltung ein Teil an einer Werkzeugaufspannplatte und der andere Teil an der zugeordneten Seite der Schließeinheit angeordnet sind. Ist die Zwischenplatte in diesem Fall als Wendeplatte ausgeführt, so wird die Wendeplatte bei Betrieb der Spritzgießmaschine nicht drehangetrieben.

Gemäß einer weiteren Ausführungsform der Erfindung ist es auch möglich, die Zwischenplatte und eine Werkzeugaufspannplatte evtl. unter Zwischenschaltung des Dummywerkzeugs fest miteinander zu verbinden. In einem solchen Fall kann das Dummywerkzeug sowohl mit der Werkzeugaufspannplatte wie auch mit der Zwischenplatte verbunden sein. Eine solche Verbindung kann evtl. sogar ohne Anordnung des Dummywerkzeugs erfolgen. In diesem Fall würde die Zwischenplatte fest mit der Aufspannplatte verbunden sein, so dass man eine kompakte Einheit erhält. Je nachdem, ob die Zwischenplatte - egal ob unter Verwendung oder ohne Verwendung eines Dummywerkzeugs - mit der Aufspannplatte verbunden ist, muss die Zwischenplatte dem Bewegungszustand der Aufspannplatte folgen. Dies bedeutet: Ist die mit der Zwischenplatte verbundene Formaufspannplatte als feste Werkzeugaufspannplatte ausgebildet, so bleibt auch die Zwischenplatte während der Produktion des 1-K-Produktes fest. Ist hingegen die mit der Zwischenplatte verbundene Werkzeugaufspannplatte eine bewegliche Werkzeugaufspannplatte, so muss die Zwischenplatte beweglich ausgebildet sein. In diesem Fall ist es erforderlich, einen evtl. vorhandenen Antrieb für die Zwischenplatte mit dieser zu entkoppeln oder wirkungslos zu machen, so dass die Zwischenplatte durch die Aufspannplatte mitbewegt werden kann.

Beim Betrieb einer herkömmlichen Wendeplatte ist es möglich, einen Auswerfer, der zum Auswerfen eines Endproduktes erforderlich, ist, im Bereich einer zweiten Formaufspannplatte vorzusehen. Sollte jedoch eine solche Schließeinheit auch zum Betrieb nur eines Formwerkzeugs geeignet sein, so kann es notwendig werden, den oder die Auswerfer im Bereich der Zwischenplatte selbst vorzusehen. Auf diese Ausführungsform sind die Ansprüche 9 bis 12 gerichtet. Diesbezüglich können in der oder an der Zwischenplatte ein oder mehrere Auswerfer angeordnet sein. Bei mehreren Auswerfern kann jeder Formaufspannplatte der Zwischenplatte ein Auswerfer zugeordnet werden. Dabei ist es möglich, jedem Auswerfer einen eigenen Antrieb zuzuordnen oder alternativ einen Antrieb für zumindest zwei Auswerfer vorzusehen. Im letzteren Fall sollte der Antrieb über eine Mimik mit den Auswerfern verbunden werden, wobei die Kopplung zwischen dem Antrieb und zumindest einem Auswerfer aufgehoben werden kann, so dass die Zwischenschaltung eines Dummywerkzeugs nicht behindert wird.

Die vorliegende Erfindung wird im folgenden anhand von verschiedenen Ausführungsbeispielen im Detail erläutert. Die Zeichnungen zeigen in:
- **Fig.1:**: eine schematische perspektivische Darstellung einer gesamten Spritzgießeinheit, welche eine Schließeinheit mit einer Wendeplatte aufweist,
- **Fig. 2:**: eine perspektivische Ansicht einer Vorrichtung zur Anordnung einer Wendeplatte in einer Schließeinheit für eine Spritzgießmaschine,
- **Fig. 3:**: eine stark schematisierte Teilschnittansicht einer Zwischenplatte mit zwei integrierten Auswerfern,
- **Fig. 4:**: eine stark schematisierte Teilschnittansicht einer weiteren Ausführungsform für eine Zwischenplatte mit einem Auswerfer-Antrieb und
- **Fig. 5:**: eine letzte Ausführungsform der Erfindung, bei der die Zwischenplatte fest mit einer Aufspannplatte verbunden ist.

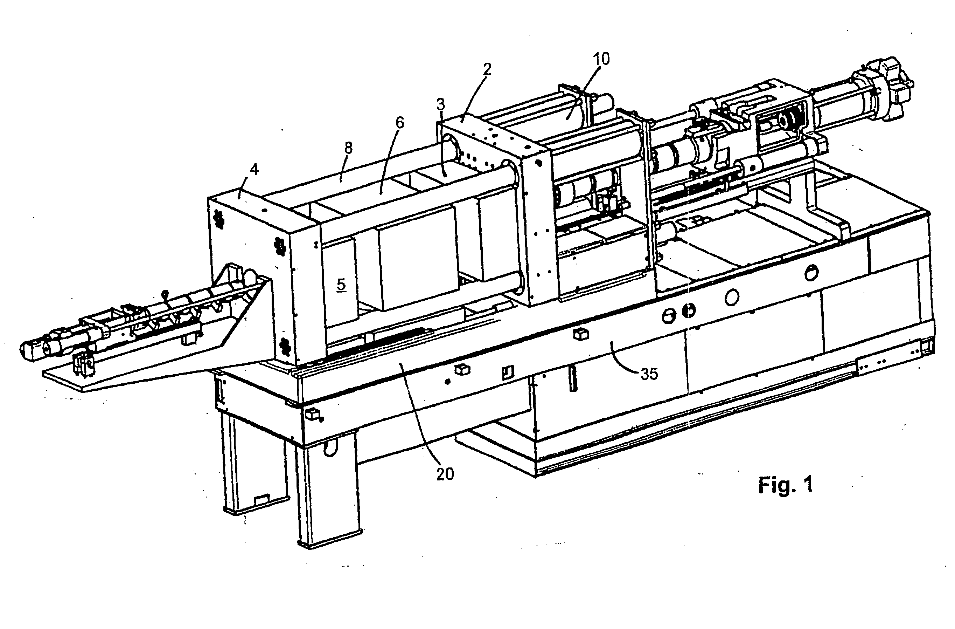

In Fig. 1 ist in stark vereinfachter Perspektivansicht eine Spritzgießmaschine mit einer erfindungsgemäßen Schließeinheit dargestellt. Die Spritzgießmaschine weist eine Schließeinheit mit einer festen Werkzeugaufspannplatte 2 und einer beweglichen Werkzeugaufspannplatte 4 auf, die beide über einen Rahmen 20 auf einem Maschinenbett 35 gelagert sind. Das Maschinenbett trägt überdies auch eine nicht näher bezifferte Einspritzeinheit, welche plastifizierte Kunststoffschmelze herstellt und - wie später noch erläutert wird - in eine Formkavität einspritzen kann. Eine weitere Plastifiziereinheit ist vorliegend über eine Konsole an der beweglichen Formaufspannplatte 4 befestigt. Zwischen den beiden Formaufspannplatten 2 und 4 ist eine sogenannte Wendeplatte 6 vorgesehen, die ebenfalls linear verfahrbar und rotatorisch drehbar ist.

Die beiden Werkzeugaufspannplatten 2 und 4 sind über vier Holme 8 miteinander verbunden, die Holme 8 sind in der beweglichen Werkzeugaufspannplatte 4 fest aufgenommen, durchragen die feste Werkzeugaufspannplatte 2, und erstrecken sich jeweils in den zugeordneten hydraulischen Antriebe 10. Durch den Betrieb der hydraulischen Antriebe 10 kann die bewegliche Werkzeugplatte 4 in Richtung der festen Werkzeugaufspannplatte 2 hin bzw. von dieser weg verfahren werden. Überdies kann mit den Antrieben 10 der Schließdruck aufgebracht werden.

An der festen Werkzeugaufspannplatte 2 ist ein Formwerkzeug 3 befestigt. An der beweglichen Werkzeugaufspannplatte 4 hingegen ist lediglich ein Dummywerkzeug 5 befestigt. Das Formwerkzeug 3 bildet mit einem Gegenstück an der als Wendeplatte ausgestalteten Zwischenplatte 6 (in Fig. 1 nicht genauer dargestellt) eine Formkavität aus, in die nach dem Schließen des Werkzeugs eine Plastikschmelze eingespritzt werden kann. Auf der gegenüberliegenden Seite der Wendeplatte 6 wird das Dummywerkzeug 5 nach Art eines normalen Werkzeugs betrieben, allerdings ohne dass nunmehr eine Formkavität ausgebildet wird. Auch wird die auf der Konsole der beweglichen Werkzeugaufspannplatte 4 befestigte Plastifiziereinheit in diesem Fall nicht betrieben.

Beim Betrieb der Spritzgießmaschine in Fig. 1 wird nach dem Schließen der Schließeinheit damit lediglich eine einzige Kavität mit dem Formwerkzeug 3 ausgebildet und in diese Kavität wird die von der festen Aufspannplatte zugeordneten Plastifiziereinheit erzeugte Schmelze eingespritzt und ein entsprechendes Produkt geformt. Auf der gegenüberliegenden Seite der Wendeplatte 6 wird kein Produkt erzeugt. Hier dient der Einsatz des Dummywerkzeugs lediglich zur Verwendung der so konstruierten Schließeinheit auch mit nur einem Formwerkzeug.

In erfindungsgemäßer Weise können mit einer solchermaßen ausgestatteten Schließeinheit auch Standardformwerkzeuge betrieben werden, und zwar unter Verwendung einer Schließeinheit mit einer Zwischenplatte.

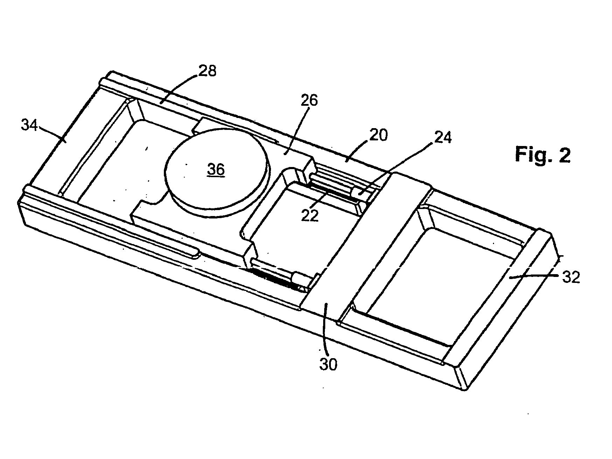

In Fig. 2 ist ein Rahmen dargestellt, wie er in einer Schließeinheit zur Aufnahme einer Wendeplatte verwendet werden kann. Hierbei ist der Rahmen 20 durch Streben 30, 32 und 34 verbunden und versteift. Im Rahmen ist zu beiden Seiten ein Linear- oder Gleitlager 22 angeordnet, auf dem eine schiebetischähnliche Grundplatte 26 linear verschiebbar ist. Die Linearverschiebung wird dabei durch die beiden Hydraulikzylinder 24 ausgeführt. Auf der Grundplatte 26 ist ein Drehteller positioniert, auf dem wiederum die Wendeplatte selbst (hier nicht dargestellt) positioniert werden kann. Ein solcher Rahmen kann zur Aufnahme einer Wendeplatte in eine Schließeinheit eingefügt sein.

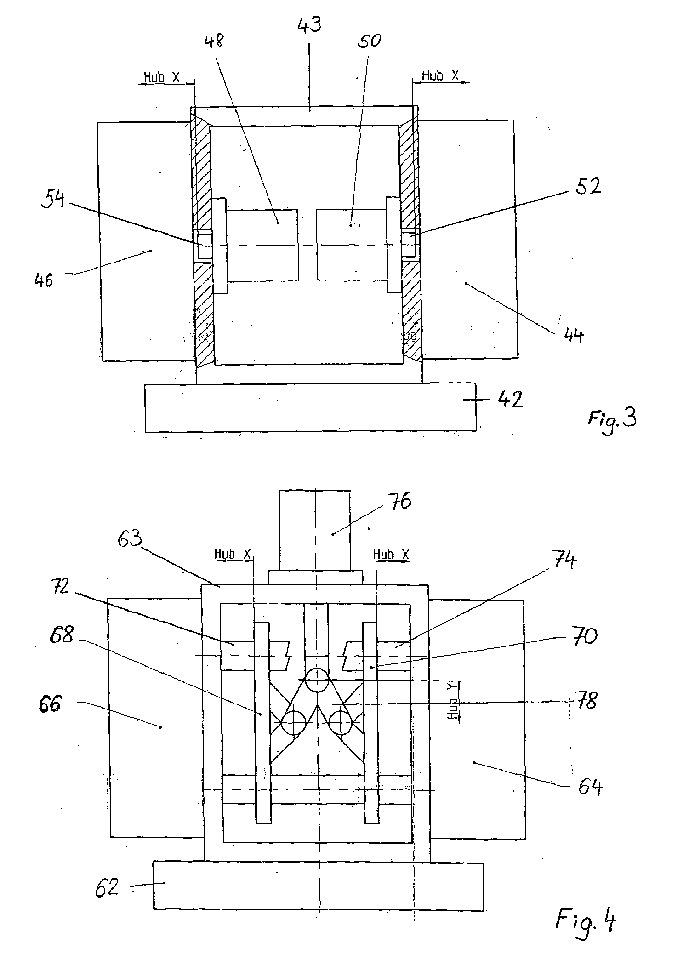

In den weiteren Figuren 3 und 4 sind verschiedene Wendeplatten-Vorrichtungen gezeigt, wie sie auf dem Drehteller 36 der Fig. 2 angeordnet werden können. Dabei entspricht in den Figuren 3 und 4 der Drehteller 42 bzw. der Drehteller 62 dem Drehteller 36 aus Fig. 2. Natürlich ist es auch möglich, auf den Drehteller zu verzichten, und die Zwischenplatte unmittelbar auf der als Schiebetisch ausgebildeten Grundplatte 26 anzuordnen.

In den Figuren 3 und 4 ist recht schematisch eine Zwischenplatte in Form einer Wendeplatte 43 bzw. 63 dargestellt, welche jeweils einen hohlen Innenraum aufweist. An den beiden, den nicht dargestellten Aufspannplatten zugewandten Seiten sind ein Teil eines Formwerkzeugs 44 bzw. 64 sowie ein Dummywerkzeug 46 bzw. 66 angeordnet. Diese Werkzeuge erfüllen, wie bereits mit Bezug auf Fig. 1 beschrieben, analoge Funktionen wie das Formwerkzeug 3 bzw. das Dummywerkzeug 5.

Wie in Fig. 3 weiter dargestellt ist, sind in der Wendeplatte 43 zwei Auswerfer vorgesehen, die jeweils an einer der jeweiligen Aufspannplatte zugeordneten Seite angeordnet sind. Jeder Auswerfer umfasst eine Auswerferstange 52, 54 sowie einen eigenen Antrieb 48, 50, der jeweils an der Innenseite der Wendeplatte befestigt ist. Beim vorliegenden Ausführungsbeispiel wird im Betrieb lediglich der dem Formwerkzeug 44 zugeordnete, schematisch dargestellte Auswerfer 50, 52, betätigt. Hingegen wird der andere Auswerfer 48, 54, welcher dem Dummywerkzeug zugeordnet ist, betriebslos gehalten.

Fig. 4 unterscheidet sich von der Fig. 3 dadurch, dass im Hohlraum der Wendeplatte 63 zwei Auswerferplatten 68 und 70 an Führungssäulen 72 und 74 geführt sind und Auswerferstangen oder -bolzen (jeweils nicht dargestellt) betätigen. Die beiden Auswerferplatten 68 und 70 sind über einen gemeinsamen Antrieb 76 betätigt, wobei eine, nicht näher bezeichnete, Hebelmimik zwischen dem Antrieb 76 und den beiden Auswerferplatten 68 und 70 zwischengeschaltet ist. Sollte es aufgrund der Anordnung des Dummywerkzeugs 66 notwendig sein, die Auswerfer festzusetzen, so kann (nicht dargestellt) die Mimik die Koppelung zwischen dem Antrieb 76 und der Auswerferplatte 68 unterbrochen werden. Allerdings ist eine solche Koppelungsunterbrechung nicht unmittelbar erforderlich, da die Auswerferstange evtl. auch in entsprechende Ausnehmungen des Dummywerkzeugs 66 verfahren werden können.

Die Ausführungsformen gemäß den Figuren 3 und 4 können in vielfacher Form eingesetzt werden, so können die Dummywerkzeuge 46 und 66 jeweils einen Teil eines zweiteiligen Dummywerkzeugs darstellen, wobei der andere Teil an der gegenüberliegenden Werkzeugaufspannplatte angeordnet ist. Die Dummywerkzeuge 46 und 66 können aber auch einstückig ausgeführt sein. Überdies können die beiden Zwischenplatten 43 und 63 auch lediglich auf einem Schiebetisch angeordnet sein, der nicht wie der in Fig. 2 dargestellte Drehteller 36, drehbar angetrieben ist.

In jedem Fall wird lediglich mit der Formaufspannplatte 44 bzw. 64 eine einzige Formkavität bei geschlossener Schließeinheit ausgebildet. Auf der anderen Seite wird durch das Dummywerkzeug 46 und 66 lediglich sichergestellt, dass die aufgrund der Zwischenplatte konstruktiv vorhandene Hubhöhe überbrückt wird und die Schließeinheit auch zum Betrieb eines einzigen Formwerkzeugs mit dem dazu erforderlichen Schließdruck geeignet ist.

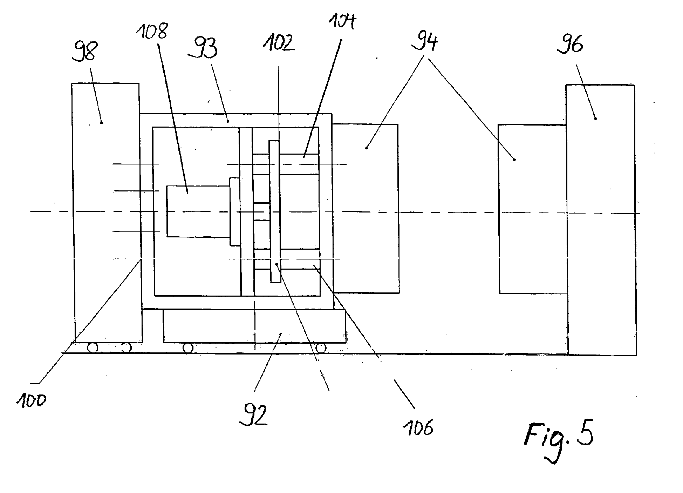

Sollte sich die Hubhöhe entsprechend verändern lassen, so kann auch eine Anordnung, wie sie in Fig. 5 gezeigt ist, betrieben werden. In diesem Fall ist eine feste Werkzeugaufspannplatte 96 auf einem nicht näher dargestellten Maschinenbett angeordnet. Auf der anderen Seite ist eine bewegliche Werkzeugaufspannplatte 98 auf dem Maschinenbett hin und her verfahrbar. Dazwischen angeordnet befindet sich ein Schiebetisch 92, der ebenfalls in Richtung der beweglichen Aufspannplatte 98 hin und her verfahrbar ist. Auf dem Schiebetisch 92 ist eine Zwischenplatte 93 angeordnet, die vorliegend über eine Schraubverbindung 100 fest mit der beweglichen Aufspannplatte 98 verbunden ist. Im hohlen Innenraum der Zwischenplatte 93 ist wiederum ein Auswerfer mit zwei Auswerferstangen 100, 106 und einer Auswerferplatte 102 angeordnet, wobei letztere über einen ebenfalls im Hohlraum der Zwischenplatte 93 angeordneten Antrieb 108 angetrieben wird. Der Antrieb 108 ist über eine separate Zwischenplatte angestützt. Auf der der Zwischenplatte 93 zugewandten Seite der festen Aufspannplatte 96 ist ein Teil eines Formwerkzeugs 94 angeordnet, dessen Gegenstück auf der der festen Werkzeugaufspannplatte 96 zugewandten Seite der Zwischenplatte 93 befestigt ist.

Beim Betrieb der nur recht schematisch dargestellten Schließeinheit wird die bewegliche Aufspannplatte 98 auf und zu verfahren und bewegt dabei die Zwischenplatte mit. Über diese Bewegung lässt sich das Formwerkzeug 94 öffnen und schließen und die Spritzgießmaschine betreiben. Im Ergebnis ist bei der Ausführungsform gemäß Fig. 5 lediglich zwischen einem Teil des Formwerkzeugs 94 und der beweglichen Aufspannplatte 98 die Zwischenplatte 93 angeordnet, die damit nicht aus der Schließeinheit entfernt werden muss. Natürlich ist es dabei erforderlich, dass - im Gegensatz zum Betrieb der Schließeinheit mit zwei Formwerkzeugen - der Schiebetisch 92 und die bewegliche Aufspannplatte 98 aufeinander zu verfahren werden können. Überdies sollte die an sich vorgesehene Antriebseinheit (nicht dargestellt) für den Schiebetisch 92 beim Betrieb durch die bewegliche Aufspannplatte 98 entkoppelt sein.

### Bezugszeichenliste

- 2: Feste Formaufspannplatte
- 3: Formwerkzeug
- 4: Bewegliche Formaufspannplatte
- 5: Formwerkzeug
- 6: Wendeplatte
- 8: Holm
- 10: Hydraulischer Antrieb
- 20: Rahmen
- 22: Linear- oder Gleitlager
- 24: Hydraulikzylinder
- 26: Grundplatte
- 28: Gleitführung
- 30, 32, 34: Strebe
- 35: Maschinenbett
- 36: Drehteller
- 40: Wendeplatte
- 42: Drehteller
- 43: Wendeplatte
- 44: Formwerkzeug
- 46: Dummywerkzeug
- 48,50: Auswerfer
- 52, 54: Auswerferstange
- 62: Drehteller
- 63: Wendeplatte
- 64: Formwerkzeug
- 66: Dummywerkzeug
- 68, 70: Auswerferplatte
- 72, 74: Führungssäule
- 76: Antrieb
- 78: Kniehebelgetriebe
- 92: Schiebetisch
- 93: Wendeplatte
- 94: Formwerkzeug
- 96: Feste Aufspannplatte
- 98: Bewegliche Aufspannplatte
- 100: Schraubverbindung
- 102: Auswerferplatte
- 104, 106: Führungssäule
- 108: Antrieb

## Patentansprüche

1. Schließeinheit für eine Spritzgießmaschine umfassend zwei Werkzeugaufspannplatten (2, 4; 96, 98), von denen zumindest eine Werkzeugaufspannplatte (4; 98) beweglich ist, sowie eine zwischen den beiden Werkzeugaufspannplatten (2, 4; 96, 98) angeordnete Zwischenplatte (6; 43; 63; 93), wobei sowohl zwischen der Zwischenplatte (6; 43; 63; 93) und der einen Werkzeugaufspannplatte (3; 96), als auch zwischen der Zwischenplatte (6; 43; 63; 93) und der anderen Werkzeugaufspannplatte (4; 98) ein Formwerkzeug anordenbar ist,
**dadurch gekennzeichnet,**
**dass** zwischen einer Werkzeugaufspannplatte (4) und der Zwischenplatte (6; 43; 63; 93) ein Dummywerkzeug (5; 46; 66) vorgesehen ist, welches keine Formkavität zur Herstellung eines Produktes aufweist, oder dass die Zwischenplatte (6; 43; 63; 93) fest mit der einen Werkzeugaufspannplatte (98) verbunden ist, so dass die Zwischenplatte dem Bewegungszustand der Werkzeugaufspannplatte folgen muss.

2. Schließeinheit nach Anspruch 1, erste Alternative
**dadurch** gekennzelchnet,
dass die Zwischenplatte (43; 63) ortsfest ausgebildet ist, und die beiden Werkzeugaufspannplatten jeweils auf- und zu verschiebbar ausgebildet sind.

3. Schließeinheit nach Anspruch 1,
**dadurch gekennzeichnet,**
**dass** die Zwischenplatte (6; 93) linear verschieblich ausgebildet ist.

4. Schließeinheit nach einem der Ansprüche 1 bis 3,
**dadurch gekennzeichnet,**
**dass** die Zwischenplatte (6; 43; 63; 93) als drehbare Wendeplatte ausgebildet ist.

5. Schließeinheit nach einem der vorhergehenden Ansprüche,
**dadurch gekennzeichnet,**
**dass** das Dummywerkzeug aus zumindest zwei Teilen besteht, von denen ein Teil an der Werkzeugaufspannplatte und ein Teil an der Zwischenplatte befestigt ist und die beiden Teile in geschlossenem Zustand der Schließeinheit aneinander anliegen.

6. Schließeinheit nach einem der vorhergehenden Ansprüche 1 bis 4,
**dadurch gekennzeichnet,**
**dass** das Dummywerkzeug (5; 46; 66) einteilig ausgebildet ist, an der Werkzeugaufspannplatte (4) oder der Zwischenplatte (43; 63) befestigt ist und in geschlossenem Zustand an der jeweils anderen Platte zur Anlage kommt.

7. Schließeinheit nach einem der vorhergehenden Ansprüche 1 bis 4,
**dadurch gekennzeichnet,**
**dass** das Dummywerkzeug sowohl an der Aufspannplatte wie auch der Zwischenplatte befestigt ist, so dass aus Aufspannplatte, Dummywerkzeug und Zwischenplatte eine insgesamt verbundene Einheit vorliegt.

8. Schließeinheit nach Anspruch 7,
**dadurch gekennzeichnet,**
**dass** die Zwischenplatte (92) beim Öffnen und Schließen der beweglichen Aufspannplatte (98) mitgenommen wird.

9. Schließeinheit nach einem der vorhergehenden Ansprüche,
**dadurch gekennzeichnet,**
**dass** in der oder an der Zwischenplatte (43; 63; 93) ein oder mehrere Auswerfer (48, 50, 52, 54; 68, 70, 72, 74, 76; 102, 104, 106, 108) angeordnet sind.

10. Schließeinheit nach Anspruch 9,
**dadurch gekennzeichnet,**
**dass** jeder Auswerfer (52, 54) einen eigenen Antrieb (48, 50) umfasst.

11. Schließeinheit nach Anspruch 9,
**dadurch gekennzeichnet,**
**dass** ein einziger Antrieb (76) vorgesehen ist, der zumindest zwei Auswerfer (68, 70, 72, 74) betreibt.

12. Schließeinheit nach Anspruch 11,
**dadurch gekennzeichnet,**
**dass** der Antrieb (76) mit den Auswerfern (68, 70, 72, 74) über eine Hebelanordnung verbunden ist, wobei zumindest die Koppelung zwischen dem Antrieb (76) und einem Auswerfer aufgehoben werden kann.

## Claims

1. Closing unit for an injection moulding machine comprising two tool clamping plates (2, 4; 96, 98), at least one tool clamping plate (4; 98) of which is movable, and an intermediate plate (6; 43; 63; 93) arranged between the two tool clamping plates (2, 4; 96, 98), wherein both between the intermediate plate (6; 43; 63; 93) and the one tool clamping plate (3; 96), and also between the intermediate plate (6; 43; 63; 93) and the other tool clamping plate (4; 98) a moulding tool is able to be arranged,
**characterized in that**
between a tool clamping plate (4) and the intermediate plate (6; 43; 63; 93) a dummy tool (5; 46; 66) is provided, which does not have a mould cavity for the production of a product, or that the intermediate plate (6; 43; 63; 93) is securely connected with the one tool clamping plate (98), so that the intermediate plate must follow the state of motion of the tool clamping plate.

2. Closing unit according to Claim 1, first alternative, **characterized in that** the intermediate plate (43; 63) is constructed so as to be stationary, and the two tool clamping plates are constructed so as to be displaceable open and closed respectively.

3. Closing unit according to Claim 1, **characterized in that** the intermediate plate (6; 93) is constructed so as to be displaceable linearly.

4. Closing unit according to one of Claims 1 to 3, **characterized in that** the intermediate plate (6; 43; 63; 93) is constructed as a rotatable swivel plate.

5. Closing unit according to one of the preceding claims, **characterized in that** the dummy tool consists of at least two parts, of which one part is fastened to the tool clamping plate and one part is fastened to the intermediate plate, and the two parts lie against each other in the closed state of the closing unit.

6. Closing unit according to one of the preceding Claims 1 to 4, **characterized in that** the dummy tool (5; 46; 66) is constructed in one piece, is fastened to the tool clamping plate (4) or to the intermediate plate (43; 63) and comes to lie against the other respective plate in the closed state.

7. Closing unit according to one of the preceding Claims 1 to 4, **characterized in that** the dummy tool is fastened both to the clamping plate and also to the intermediate plate, so that from the clamping plate, dummy tool and intermediate plate, one unit is present which is connected as a whole.

8. Closing unit according to Claim 7, **characterized in that** the intermediate plate (92) is entrained on opening and closing of the movable clamping plate (98).

9. Closing unit according to one of the preceding claims, **characterized in that** one or several ejectors (48, 50, 52, 54; 68, 70, 72, 74, 76; 102, 104, 106, 108) are arranged in or on the intermediate plate (43; 63; 93).

10. Closing unit according to Claim 9, **characterized in that** each ejector (52, 54) comprises its own drive (48, 50).

11. Closing unit according to Claim 9, **characterized in that** a single drive (76) is provided, which drives at least two ejectors (68, 70, 72, 74).

12. Closing unit according to Claim 11, **characterized in that** the drive (76) is connected with the ejectors (68, 70, 72, 74) via a lever arrangement, wherein at least the linkage between the drive (76) and an ejector can be rendered no longer effective.

## Revendications

1. Unité de fermeture destinée à une machine de moulage par injection comprenant deux plateaux de serrage de moule (2, 4 ; 96, 98) desquels au moins un plateau de serrage de moule (4 ; 98) peut être déplacé, ainsi qu'un plateau intermédiaire (6 ; 43 ; 63 ; 93) disposé entre les deux plateaux de serrage de moule (2, 4 ; 96, 98), dans lequel un moule peut être placé tant entre le plateau intermédiaire (6 ; 43 ; 63 ; 93) et l'un plateau de serrage de moule (3 ; 96) qu'entre le plateau intermédiaire (6 ; 43 ; 63 ; 93) et l'autre plateau de serrage de moule (4 ; 98),
**caractérisée en ce qu'**entre un plateau de serrage de moule (4) et le plateau intermédiaire (6 ; 43 ; 63 ; 93), un moule factice (5 ; 46 ; 66) est prévu, lequel ne présente pas de cavité de moule pour fabriquer un produit, ou **en ce que** le plateau intermédiaire (6 ; 43 ; 63 ; 93) est relié fixement à l'un plateau de serrage de moule (98) de façon à ce que le plateau intermédiaire puisse suivre la vitesse de déplacement du plateau de serrage de moule.

2. Unité de fermeture selon la revendication 1, première variante, **caractérisée en ce que** le plateau intermédiaire (43 ; 63) est fixe et que les deux plateaux de serrage de moule peuvent respectivement coulisser et se déplacer.

3. Unité de fermeture selon la revendication 1, **caractérisée en ce que** le plateau intermédiaire (6 ; 93) est formé en pouvant être déplacé linéairement.

4. Unité de fermeture selon l'une des revendications 1 à 3, **caractérisée en ce que** le plateau intermédiaire (6 ; 43 ; 63 ; 93) est un plateau rotatif.

5. Unité de fermeture selon l'une des revendications précédentes, **caractérisée en ce que** l'outil factice est composé d'au moins deux parties, desquelles une partie est fixée sur le plateau de serrage de moule et une partie est fixée sur le plateau intermédiaire et les deux parties reposent l'une sur l'autre lorsque l'unité de fermeture est fermée.

6. Unité de fermeture selon l'une des revendications 1 à 4, **caractérisée en ce que** l'outil factice (5 ; 46 ; 66) est formé d'une seule pièce, est fixé sur le plateau de serrage de moule (4) ou le plateau intermédiaire (43 ; 63) et vient se poser sur l'autre plateau respectif dans l'état fermé.

7. Unité de fermeture selon l'une des revendications 1 à 4, **caractérisée en ce que** l'outil factice est fixé tant sur le plateau de serrage de moule que sur le plateau intermédiaire, de façon à ce que l'on ait en tout une unité reliée avec le plateau de serrage, l'outil factice et le plateau intermédiaire.

8. Unité de fermeture selon la revendication 1, **caractérisée en ce que** le plateau intermédiaire (92) est entraîné lors de l'ouverture et de la fermeture du plateau de serrage pouvant être déplacé (98).

9. Unité de fermeture selon l'une des revendications précédentes, **caractérisée en ce qu'**un ou plusieurs éjecteur (s) (48, 50, 52, 54 ; 68, 70, 72, 74, 76 ; 102, 104, 106, 108) est/sont disposé(s) dans ou sur le plateau intermédiaire (43 ; 63).

10. Unité de fermeture selon la revendication 9, **caractérisée en ce que** chaque éjecteur (52, 54) a son propre entraînement (48, 50).

11. Unité de fermeture selon la revendication 9, **caractérisée en ce qu'**un entraînement unique (76) est prévu, lequel entraîne au moins deux éjecteurs (68, 70, 72, 74).

12. Unité de fermeture selon la revendication 11, **caractérisée en ce que** l'entraînement (76) est relié aux éjecteurs (68, 70, 72, 74) via un agencement de levier, dans lequel au moins le couplage entre l'entraînement (76) et un éjecteur peut être soulevé.
